# EUROPÄISCHE PATENTSCHRIFT

(11) **EP 3 109 961 B1**
(45) Veröffentlichungstag und Bekanntmachung des Hinweises auf die Patenterteilung: **25.09.2019**
(21) Anmeldenummer: 16171236.9
(22) Anmeldetag: 25.05.2016
(51) Int. Cl.: H02G 5/06, H01B 7/16, H01B 9/02, H01B 9/06

(54) **LEITUNGSMODUL FÜR EINE ERDVERLEGBARE HOCHSPANNUNGSLEITUNG, HOCHSPANNUNGSLEITUNG MIT LEITUNGSMODULEN SOWIE VERFAHREN ZUR HERSTELLUNG DER LEITUNGSMODULE**
CONDUIT MODULE FOR A HIGH VOLTAGE TRANSMISSION LINE WHICH CAN BE BURIED, HIGH VOLTAGE LINE WITH CONDUIT MODULES AND METHOD FOR PRODUCING THE CONDUIT MODULES
MODULE DE CONDUITES POUR UNE LIGNE HAUTE TENSION ENTERREE, LIGNE HAUTE TENSION COMPRENANT DES MODULES DE CONDUITES ET PROCEDE DE PRODUCTION DU MODULE DE CONDUITES

(30) Priorität: 24.06.2015 DE 102015211722
(43) Veröffentlichungstag der Anmeldung: 28.12.2016
(73) Patentinhaber: Siemens Aktiengesellschaft, 80333 München (DE)
(72) Erfinder: Engels, Engelbert, 51143 Köln (DE); Jahnel, Dietmar, 53842 Troisdorf (DE); Langens, Achim, 53797 Lohmar (DE); Sendobry, Sebastian, 53721 Siegburg (DE)

(56) Entgegenhaltungen:
- CH-A- 421 240
- DE-A1- 2 141 817
- DE-A1- 3 331 498
- DE-A1- 19 916 300
- DE-B- 1 185 700
- DE-T1- 19 882 718
- DE-U- 7 143 424
- US-A- 3 684 816

## Beschreibung

Die Erfindung betrifft ein Leitungsmodul für eine erdverlegbare Hochspannungsleitung mit einem Stromleiterabschnitt, einem konzentrisch um den Stromleiterabschnitt angeordneten Außenrohr und einem zwischen dem Stromleiterabschnitt und dem Außenrohr angeordneten Isolator.

Bekannte erdverlegbare Hochspannungsleitungen sind üblicherweise als gasisolierte Rohrleiter (GIL) mit einer Mehrzahl der miteinander verbindbaren Leitungsmodule ausgeführt. Jedes Leitungsmodul umfasst dabei den elektrischen Stromleiterabschnitt, der mittels eines geeigneten Isoliergases elektrisch von einer Umgebung isoliert ist. Das meist zylinderförmige Außenrohr des bekannten Leitungsmoduls ist daher notwendigerweise gasdicht ausgeführt, um Verluste des Isoliergases zu minimieren. Als Isoliergase kommen bei den bekannten erdverlegbaren Hochspannungsleitungen meist Gasmischungen zum Einsatz, die das Gas SF₆ enthalten, das hervorragende Isoliereigenschaften besitzt, jedoch zugleich oft als wenig umweltverträglich angesehen wird. Zur Erdverlegung der gasisolierten Rohrleiter müssen ferner bestimmte Bedingungen, wie beispielsweise extreme Sauberkeit, Staubfreiheit und gute Beleuchtung gewährleistet sein. Die Leitungsmodule werden zur Herstellung der erdverlegbaren Hochspannungsleitung meist zusammengeschweißt, bevor sie erdverlegt werden.

Gasisolierte Hochspannungsleitungen, die zur Stützung des Außenrohres Stützelemente mit zwei unterschiedlichen Isolationsmaterialien, darunter einem Kunststoffschaum, aufweisen, sind aus der DE 198 82 718 T1, der DE 199 16 300 A1 und der DE 2 141 817 bekannt.

Ein schaumstoffisoliertes Leitungsmodul für eine erdverlegbare Hochspannungsleitung ist aus der DE 3331 498 A1 bekannt. Ein feststoffisoliertes Leitungsmodul ist aus der DE 1185700 B1 bekannt.

Die Aufgabe der Erfindung besteht darin, ein artgemäßes Leitungsmodul vorzuschlagen, das möglichst zuverlässig in Betrieb und einfach in Wartung ist.

Die Aufgabe wird durch ein Leitungsmodul gemäß Anspruch 1 gelöst.

Demnach ist der Stromleiterabschnitt des erfindungsgemäßen Leitungsmoduls im Wesentlichen feststoffisoliert. Dieser Aufbau resultiert in zahlreichen Vorteilen gegenüber der bekannten gasisolierten Hochspannungsleitung, die im Folgenden kurz erläutert werden.

Das erfindungsgemäße Leitungsmodul ist selbsttragend. Auf einen Einbau von Abstandshaltern und Stützern des Außenrohres gegenüber dem Stromleiterabschnitt kann damit verzichtet werden. Dies vereinfacht den Aufbau und senkt die Kosten des Leitungsmoduls.

Die sich in dem Isolator der GIL-Anlagen im Laufe des Betriebs der Hochspannungsleitung bildenden Verschmutzungspartikeln, die den Betrieb dieser Anlagen beeinträchtigen können, treten in dem erfindungsgemäßen Leitungsmodul nicht auf. Dadurch ist die Hochspannungsleitung mit den Leitungsmodulen gemäß der Erfindung im Betrieb zuverlässiger.

Auf einen Einsatz des SF₆-Gases im Isolator kann in dem erfindungsgemäßen Leitungsmodul ganz oder zumindest teilweise verzichtet werden. Dies macht das erfindungsgemäße Leitungsmodul auch unter den Umweltaspekten vorteilhaft.

Zudem muss das Leitungsmodul ohne Gasisolation nicht gasdicht ausgeführt sein, was den Aufbau des Leitungsmoduls vereinfacht. Eine Minderung der Isolationsfähigkeit des Leitungsmoduls aufgrund von Gasentweichung kann in diesem Fall nicht auftreten. Somit ist die Zuverlässigkeit des Leitungsmoduls vorteilhaft erhöht.

Das erfindungsgemäße Leitungsmodul kann an nahezu jeder beliebigen Stelle getrennt werden. Dies Vereinfacht erheblich die Wartung und die Reparatur der Hochspannungsleitung, die aus den erfindungsgemäßen Leitungsmodulen zusammengesetzt ist.

Der Einsatz des äußeren Isolierkörpers aus Kunststoffschaum ermöglicht vorteilhaft die Verwendung des Leitungsmoduls auch bei sehr hohen Spannungen, beispielsweise oberhalb von 1000 kV, ohne, dass die dazu notwendige Isolationsstärke allein durch einen entsprechend groß dimensionierten Harz-Isolator bereitgestellt werden muss.

Gemäß einer vorteilhaften Ausführungsform der Erfindung weist das Leitungsmodul an wenigstens einem axialen Leitungsmodulende einen zumindest teilweise konusförmigen Vorsprung auf, der dazu eingerichtet ist, mit einer konusförmigen Ausnehmung eines weiteren Leitungsmoduls formkomplementär zusammenzuwirken. Der Vorsprung dient zu einer Vergrößerung der Kontaktfläche zwischen zwei in der Hochspannungsleitung nebeneinander angeordneten Leitungsmodulen. Zumindest eine Stirnfläche in einer Längsrichtung des Leitungsmoduls weist demnach eine flächenvergrößerte Profilierung aus Vorsprüngen und/oder Ausnehmungen auf. Auf diese Weise kann eine besonders zuverlässige Verbindung zwischen den Leitungsmodulen erreicht werden. Die Isolierung an einer Kontaktstelle ist zudem besonders homogen ausgestaltet. Es ist hierbei anzumerken, dass die Konusform der Ausnehmung bzw. des Vorsprunges auch durch andere geeignete Formen, die gleichfalls die Kontaktfläche vergrößern, ersetzt werden kann. Ein Leitungsmodul kann an einem ersten Leitungsmodulende einen Vorsprung und an einem zweiten Leitungsmodulende eine Ausnehmung aufweisen. Es sind ferner Leitungsmodule denkbar, die an beiden Leitungsmodulenden jeweils einen Vorsprung oder jeweils eine Ausnehmung aufweisen.

Bevorzugt umfasst das Leitungsmodul wenigstens einen ringförmigen Verbindungsflansch zum Verbinden des Leitungsmoduls mit einem weiteren Leitungsmodul, der konzentrisch zum Außenrohr an einem der axialen Leitungsmodulenden angeordnet ist. Der Verbindungsflansch kann dazu dienen, zwei nebeneinander angeordnete Leitungsmodule mittels Verschraubung miteinander zu verbinden. Dies stellt gegenüber beispielsweise einer Verschweißung der Leitungsmodule eine einfachere und kostengünstige Verbindung dar. Selbstverständlich kann das Leitungsmodul an beiden Leitungsmodulenden jeweils einen Verbindungsflansch aufweisen.

Grundsätzlich kann der Stromleiterabschnitt des Leitungsmoduls ein Hohlleiter oder ein Vollleiter sein, beispielsweise aus Kupfer oder Aluminium. Es wird als vorteilhaft angesehen, wenn der Stromleiterabschnitt zumindest an einem ersten axialen Stromleiterende ein zylinderförmiger Hohlleiter ist. Es kann somit auf einfache und zuverlässige Weise eine elektrische Verbindung zwischen zwei nebeneinander angeordneten Leitungsmodulen hergestellt werden, indem in das als Hohlleiter ausgebildete Stromleiterende des Leitungsmoduls ein Teil des Stromleiterabschnitts eines weiteren Leitungsmoduls eingeschoben wird.

Vorteilhafterweise weist der Stromleiterabschnitt an einem zweiten axialen Leiterende einen Zapfen auf, dessen Durchmesser kleiner oder gleich einem Innendurchmesser des Hohlleiters ist. Dieser Zapfen, der bevorzugt aus dem gleichen Material ist, wie der übrige Stromleiterabschnitt, kann in das als Hohlleiter ausgebildete Stromleiterende eingeführt sein, um die elektrische Verbindung zwischen zwei Leitungsmodulen herzustellen. Für eine gute elektrische Kontaktierung kann der Zapfen bündig an dem Hohlleiter anliegen.

Gemäß einer Ausführungsform der Erfindung weist der Zapfen ringförmige Kontaktlamellen auf, die radial außen am Zapfen angeordnet sind. Geeigenterweise ist der Durchmesser des Zapfens in diesem Fall kleiner als der Innendurchmesser des Hohlleiters. Die Kontaktlamellen sind aus einem elektrisch leitenden Material und flexibel ausgeführt. Sie üben nach dem Einführen des Zapfens in den Hohlleiter eine Federkraft bzw. Andruckkraft zwischen dem Zapfen und einer Innenfläche des Hohlleiters aus. Dadurch ist der elektrische Kontakt zwischen den Leitungsmodulen besonders stabil. Die Kontaktlamellen können derart ausgerichtet sein, dass sie einem Auseinanderrutschen der Leitungsmodule entgegenwirken.

Bevorzugt umfasst der Vollkunststoff des inneren Isolierkörpers ein Epoxidharz oder ein Polyamidharz. Harze insgesamt und insbesondere diese Harze weisen besonders gute Isolationseigenschaften auf.

Geeigneterweise umfasst der Kunststoffschaum des äußeren Isolierkörpers einen Polyurethanschaumstoff.

Bevorzugt weist das Leitungsmodul ein Außendurchmesser von mindestens 400 mm, besonders bevorzugt mindestens 600 mm auf. Die Verwendung von Leitungsmodulen mit solchen Ausmaßen ermöglicht den Einsatz der Leitungsmodule bei Hochspannungsleitungen, die Hochspannungen von über 400 kV, insbesondere Gleichspannungen von über 600 kV aufweisen. Das Außenrohr ist geeigneterweise aus Aluminium oder Stahl gefertigt.

Die Erfindung betrifft ferner eine erdverlegbare Hochspannungsleitung mit einer Mehrzahl von Leitungsmodulen, wobei jedes der Leitungsmodule einem Stromleiterabschnitt, einem konzentrisch um den Stromleiterabschnitt angeordneten zylinderförmigen Außenrohr und einem zwischen dem Stromleiterabschnitt und dem Außenrohr angeordneten Isolator umfasst.

Die Aufgabe der Erfindung besteht darin, eine solche Hochspannungsleitung vorzuschlagen, die möglichst kostengünstig und zuverlässig ist.

Die Erfindung löst die Aufgabe dadurch, dass der Isolator einen inneren Isolierkörper aus einem Vollkunststoff und einen äußeren Isolierkörper aus einem Kunststoffschaum umfasst, die jeweils konzentrisch um den Stromleiterabschnitt angeordnet sind und die Leitungsmodule der Hochspannungsleitung mittels Verschraubung miteinander verbunden sind.

Die Vorteile der erfindungsgemäßen Hochspannungsleitung ergeben sich aus den zuvor beschriebenen Vorteilen der Leitungsmodule. Zudem bietet die Verbindung der Leitungsmodule mittels Verschraubung den Vorteil, dass diese besonders einfach und dadurch kostengünstig ist.

Die Leitungsmodule der Hochspannungsleitung können beispielsweise eine Länge von 5 m bis 20 m, vorzugsweise von 10 m bis 15 m, aufweisen. Die Hochspannungsleitung kann zur Erdverlegung in Teilabschnitte von bis zu 50 der Leitungsmodule unterteilt sein.

Die Erfindung betrifft darüber hinaus ein Verfahren zur Herstellung eines Leitungsmoduls für eine erdverlegbare Hochspannungsleitung.

Die Aufgabe der Erfindung besteht darin, ein solches Verfahren vorzuschlagen, das möglichst kostengünstig ist.

Die Aufgabe wird durch ein Verfahren gelöst, bei dem ein Kuststoffschaum aus flüssigen und/oder festen Komponenten in einem Hohlraum zwischen einem mit einem Vollkunststoff vergossenen Stromleiterabschnitt der Hochspannungsleitung und einem konzentrisch um den Stromleiterabschnitt angeordneten Außenrohr aufgeschäumt wird, wobei zwischen dem einen inneren Isolierkörper bildenden Vollkunststoff und dem Außenrohr ein äußerer Isolierkörper aus dem Kunststoffschaum erzeugt wird.

Demnach bildet beim erfindungsgemäßen Verfahren das Außenrohr in Zusammenwirkung mit dem inneren Isolierkörper die Form, in der der Kunststoffschaum erzeugt wird. Auf diese Weise erfolgt die Anpassung der Körperform des äußeren Isolierkörpers automatisch. Der äußere Isolierkörper muss nicht mehr zur Anpassung an das Außenrohr zusätzlich bearbeitet werden. Dies senkt die Herstellungskosten des Leitungsmoduls.

Die flüssigen und/oder festen Komponenten zum Aufschäumen des Kunststoffschaumes werden geeigneterweise durch eine oder mehrere dazu vorgesehene Einlassöffnungen beispielsweise im Außenrohr in den Hohlraum eingeführt.

Es ist darüber hinaus denkbar, das Aufschäumen des Kunststoffschaumes erst nach einem Zusammensetzen der Leitungsmodule zu einem vorgegebenen Teilabschnitt der Hochspannungsleitung durchgeführt wird. Auf diese Weise wird ein besonders homogener Isolator hergestellt, bei dem die äußeren Isolierkörper der einzelnen Leitungsmodule ohne einen Schnitt übergangslos ineinander übergehen.

Die Erfindung soll im Folgenden anhand der in den Figuren 1 bis 4 dargestellten Ausführungsbeispiele weiter erläutert werden.
- Figur 1: zeigt ein Ausführungsbeispiel eines erfindungsgemäßen Leitungsmoduls in einer schematischen Querschnittsdarstellung;
- Figur 2: zeigt einen Ausschnitt des Leitungsmoduls der Figur 1 in einer schematischen Seitenquerschnittsdarstellung;
- Figur 3: zeigt einen Ausschnitt einer schematischen Seitenquerschnittsdarstellung eines weiteren Ausführungsbeispiels eines erfindungsgemäßen Leitungsmoduls;
- Figur 4: zeigt einen Ausschnitt einer erfindungsgemäßen erdverlegbaren Hochspannungsleitung in schematischer Darstellung.

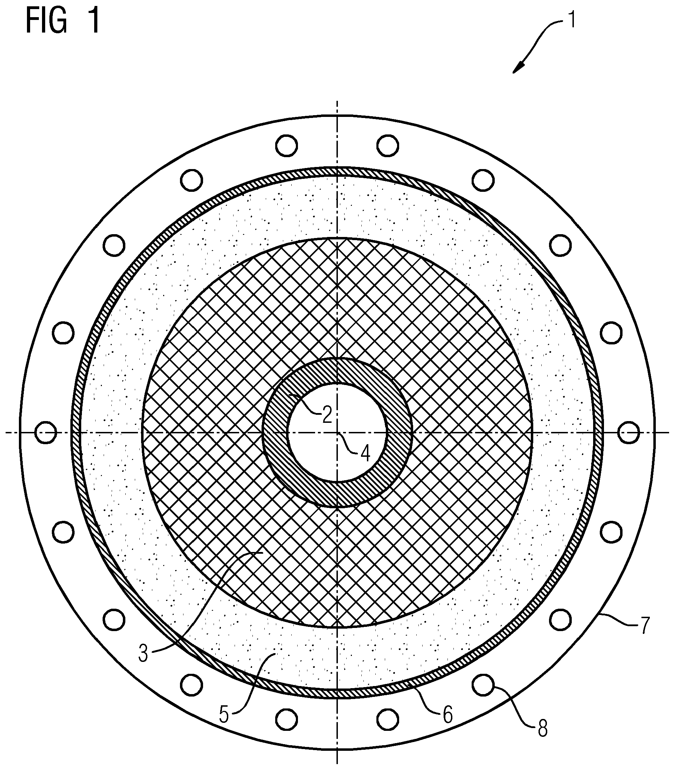

Im Einzelnen ist in Figur 1 ein Ausführungsbeispiel eines erfindungsgemäßen Leitungsmoduls 1 dargestellt. Das Leitungsmodul 1 umfasst einen Stromleiterabschnitt 2, der als Hohlleiter aus Aluminium ausgebildet ist. Der Stromleiterabschnitt 2 ist von einem inneren Isolierkörper 3 aus einem Vollkunststoff umgeben. In dem in Figur 1 dargestellten Ausführungsbeispiel ist der Vollkunststoff ein Epoxidharz. Der zylinderförmige Hohlleiter 2 und der innere Isolierkörper 3 sind konzentrisch um einen Mittelpunkt des Leitungsmoduls 1 angeordnet, der in Figur 1 mit dem Bezugszeichen 4 versehen ist. Konzentrisch um den inneren Isolierkörper 3 ist ein äußerer Isolierkörper 5 ausgebildet, der einen Kunststoffschaum in Form eines Polyurethanschaums umfasst. Eine äußere Begrenzung des Leitungsmoduls 1 ist durch ein konzentrisch um den Mittelpunkt 4 angeordnetes zylinderförmiges Außenrohr 6 gegeben. Außen am Außenrohr 6 ist ein Verbindungsflansch 7 erkennbar, der Öffnungen 8 zum Verschrauben des Leitungsmoduls mit einem weiteren Leitungsmodul aufweist.

Durch die Verbindung mit anderen Leitungsmodulen, die im betrachteten Ausführungsbeispiel gleichartig zum Leitungsmodul 1 aufgebaut sind, ergibt sich eine modular aufgebaute Hochspannungsleitung, die erdverlegbar, d.h. zu einer ober- oder unterirdischen Verlegung in einem Tunnel oder direkt in Erde geeignet, ist. Der Außendurchmesser des Leitungsmoduls 1 im dargestellten Ausführungsbeispiel beträgt 400 mm. Damit ergibt sich eine Isolationsfähigkeit des Leitungsmoduls, die eine Spannung in der Hochspannungsleitung insbesondere von über 400 kV erlaubt.

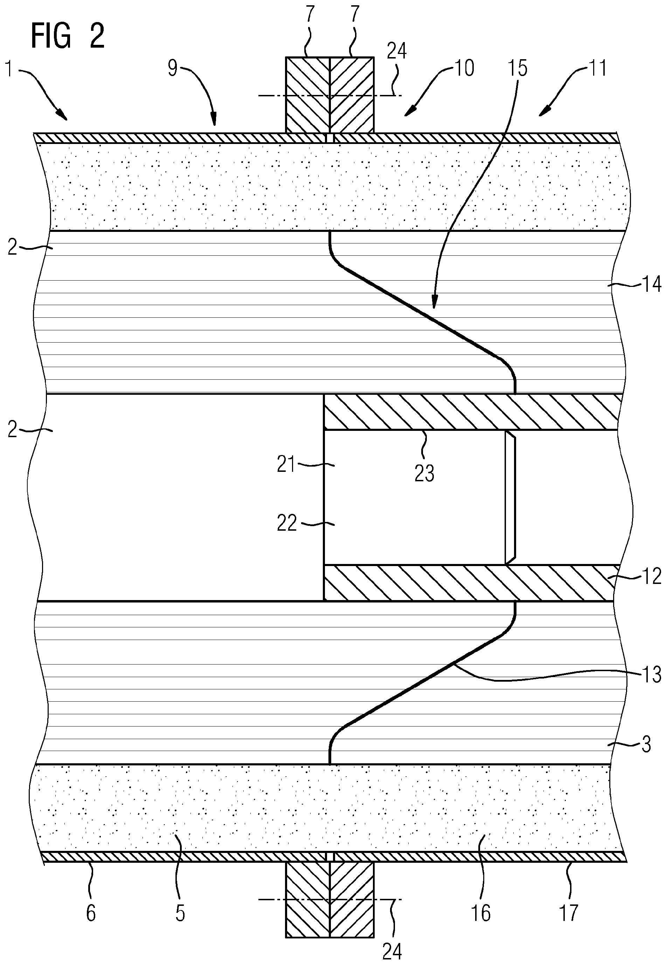

Figur 2 zeigt einen Seitenquerschnitt durch das Leitungsmodul 1 der Figur 1. Aus übersichtlichkeitsgründen wurden in den Figuren 1 und 2 gleiche und gleichartige Teile mit gleichen Bezugszeichen versehen. In Figur 2 ist insbesondere ein Leitungsmodulende 9 des Leitungsmoduls 1 dargestellt, das mit einem zweiten Leitungsmodulende 10 eines weiteren Leitungsmoduls 11 verbunden ist. Das Leitungsmodul 1 umfasst den Stromleiterabschnitt 2, dessen Stromleiterende 21 einen Zapfen 22 aufweist, dessen Durchmesser gleich einem Innendurchmesser eines Hohlleiterabschnitts 12 des weiteren Leitungsmoduls 11 ist. Der Zapfen 22 schließt somit bündig an eine Innenfläche 23 des Stromleiterabschnitts 12 an. Das Leitungsmodul 1 und das weitere Leitungsmodul 11 sind miteinander über eine Schraubverbindung 24 miteinander verbunden, die über jeweils einen Verbindungsflansch 7 des Leitungsmoduls 1 und des weiteren Leitungsmoduls 11 mittels mehrerer Schrauben 24 hergestellt ist.

Der innere Isolierkörper 3 des Leitungsmoduls 1 schließt an dessen axialer Stirnfläche bündig an einen inneren Isolierkörper 14 des weiteren Leitungsmoduls 11, wobei die Verbindungslinie der beiden Isolierkörper in der Figur 2 mittels einer durchgezogenen Linie 13 dargestellt ist. Es ist in Figur 2 erkennbar, dass das Leitungsmodul 1 am ersten Leitungsende 9 einen konusförmigen Vorsprung 15 aufweist, der mit einer entsprechenden, formkomplementären konusförmigen Ausnehmung des weiteren Leitungsmoduls 11 zusammenwirkt. Der äußere Isolierkörper 5 des Leitungsmoduls 1 geht übergangslos in den äußeren Isolierkörper 16 des weiteren Leitungsmoduls 11 über. Dies ist im dargestellten Ausführungsbeispiel dadurch erreicht, dass Herstellung des Kunststoffschaumes der äußeren Isolierkörpers 5 und 16 nach dem Verbinden der beiden Leitungsmodule 1, 11 erfolgt.

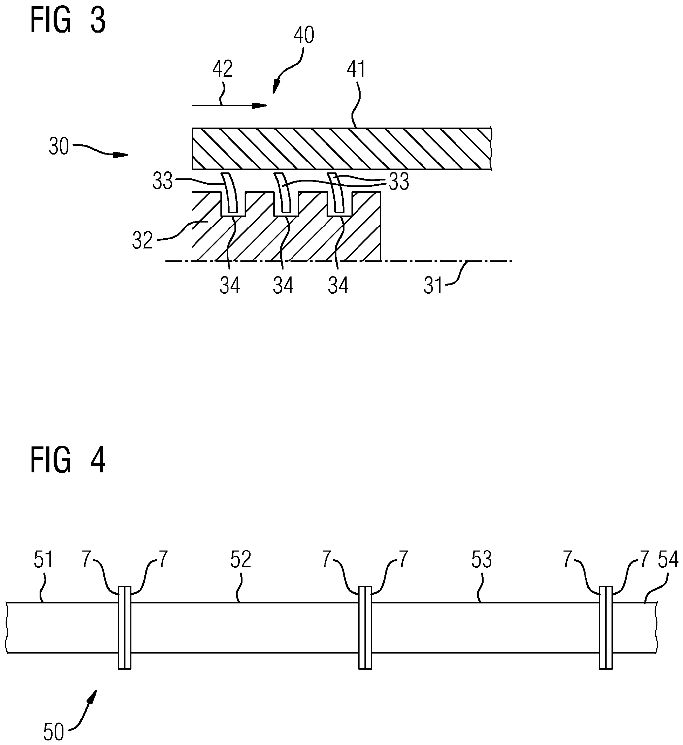

Figur 3 zeigt einen Ausschnitt einer Querschnittsseitendarstellung eines alternativen Ausführungsbeispiels eines erfindungsgemäßen Leitungsmoduls 30. Figur 3 ist mit einer durchbrochenen Linie 31 eine Symmetrieachse der symmetrischen Anordnung des Leitungsmoduls 30 gekennzeichnet. Insbesondere ist in Figur 3 dargestellt, wie ein Zapfen 32 an einem ersten Leitungsmodulende des Leitungsmoduls 30 mit einem Hohlleiter 41 eines weiteren Leitungsmoduls 40 zusammenwirkt, um eine elektrische Verbindung zwischen den beiden Leitungsmodulen 30 und 40 herzustellen. Es ist aus Figur 3 ersichtlich, dass der Zapfen 32 einen Durchmesser aufweist, der kleiner als ein Innendurchmesser des Hohlleiters 41 des weiteren Leitungsmoduls 40 ist. Zur Herstellung der elektrischen Verbindung zwischen dem Zapfen 32 und dem Hohlleiter 41 sind Kontaktlamellen 33 vorgesehen, die ringförmig um den Zapfen 32 angeordnet sind, wobei die Kontaktlamellen 33 jeweils in eine dafür vorgesehene Nut 34 im Zapfen 32 eingesetzt sind. Die Kontaktlamellen sind aus einem elektrisch leitfähigen Material hergestellt und flexibel ausgebildet. Sie entfalten eine Federkraft, die für eine stabile elektrische Verbindung zwischen dem Zapfen 32 und dem Hohlleiter 41 sorgt. Die Lamellen sind entgegen einer Richtung gekrümmt, die in Figur 1 durch einen Pfeil 42 dargestellt ist, und die mit der Richtung gleichzusetzen ist, in die der Zapfen 32 beim Verbinden der beiden Leitungsmodule 30 und 40 bewegt wird.

Bezüglich der übrigen Aspekte des Aufbaus entsprechen die Leitungsmodule 30 und 40 dem Leitungsmodul 1 der Figur 1.

In Figur 4 ist eine erdverlegbare Hochspannungsleitung 50 dargestellt. Die Hochspannungsleitung 50 ist modular aufgebaut und umfasst Leitungsmodule 51, 52, 53 und 54, die alle gleichartig gemäß einem der in den vorangehenden Figuren gezeigten Ausführungsbeispiele realisiert sind. Die Leitungsmodle 51-54 sind mittels Verschraubung der Verbindungsflansche 7 an den dazu vorgesehenen Verbindungsstellen der Leitungsmodule 51-54 miteinander verbunden.

In dem in Figur 4 dargestellten Ausführungsbeispiel beträgt die Länge der Leitungsmodule jeweils ca. 8 m.

## Patentansprüche

1. Leitungsmodul (1) für eine erdverlegbare Hochspannungsleitung mit einem Stromleiterabschnitt (2), einem konzentrisch um den Stromleiterabschnitt (2) angeordneten Außenrohr (6) und einem zwischen dem Stromleiterabschnitt (2) und dem Außenrohr (6) angeordneten Isolator,
**dadurch gekennzeichnet, dass** der Isolator
- einen inneren Isolierkörper (3) aus einem Vollkunststoff und
- einen äußeren Isolierkörper (5) aus einem Kunststoffschaum umfasst,
die jeweils konzentrisch um den Stromleiterabschnitt (2) angeordnet sind, so dass der innere Isolierkörper (3) und der äußere Isolierkörper (5) den Raum zwischen dem Stromleiterabschnitt (2) und dem Außenrohr (6) im Wesentlichen vollständig füllen.

2. Leitungsmodul (1) nach Anspruch 1, wobei das Leitungsmodul (1) an wenigstens einem axialen Leitungsmodulende (9) einen zumindest teilweise konusförmigen Vorsprung (15) aufweist, der dazu eingerichtet ist, mit einer konusförmigen Ausnehmung eines weiteren Leitungsmoduls formkomplementär zusammenzuwirken.

3. Leitungsmodul (1) nach einem der vorangehenden Ansprüche, wobei das Leitungsmodul (1) wenigstens einen ringförmigen Verbindungsflansch (7) zum Verbinden des Leitungsmoduls (1) mit einem weiteren Leitungsmodul umfasst, der konzentrisch zum Außenrohr (6) an einem axialen Leitungsmodulende (9) angeordnet ist.

4. Leitungsmodul (1) nach einem der vorangehenden Ansprüche, wobei der Stromleiterabschnitt (2) zumindest an einem ersten axialen Stromleiterende ein zylinderförmiger Hohlleiter (12) ist.

5. Leitungsmodul (1) nach Anspruch 4, wobei der Stromleiterabschnitt (2) an einem zweiten axialen Leiterende einen Zapfen (22) aufweist, dessen Durchmesser kleiner oder gleich einem Innendurchmesser des Hohlleiters (12) ist.

6. Leitungsmodul (30) nach Anspruch 5, wobei der Zapfen (22) ringförmige Kontaktlamellen (33) aufweist, die radial außen am Zapfen (32) angeordnet sind.

7. Leitungsmodul (1) nach einem der vorangehenden Ansprüche, wobei der Vollkunststoff des inneren Isolierkörpers (3) ein Epoxidharz oder ein Polyamidharz umfasst.

8. Leitungsmodul (1) nach einem der vorangehenden Ansprüche, wobei der Kunststoffschaum des äußeren Isolierkörpers (5) einen Polyurethanschaumstoff umfasst.

9. Leitungsmodul (1) nach einem der vorangehenden Ansprüche, wobei das Leitungsmodul ein Außendurchmesser von mindestens 400 mm aufweist.

10. Erdverlegbare Hochspannungsleitung (50) mit einer Mehrzahl von Leitungsmodulen (51-54) gemäß einem der Ansprüche 1 bis 9, wobei die Leitungsmodule (51-54) mittels Verschraubung miteinander verbunden sind.

11. Verfahren zur Herstellung eines Leitungsmoduls (11) für eine erdverlegbare Hochspannungsleitung gemäß Anspruch 1, bei dem ein Kuststoffschaum aus flüssigen und/oder festen Komponenten in einem Hohlraum zwischen einem mit einem Vollkunststoff vergossenen Stromleiterabschnitt (2) der Hochspannungsleitung und einem konzentrisch um den Stromleiterabschnitt angeordneten Außenrohr (6) aufgeschäumt wird, wobei zwischen dem einen inneren Isolierkörper (4) bildenden Vollkunststoff und dem Außenrohr ein äußerer Isolierkörper (5) aus dem Kunststoffschaum erzeugt wird.

## Claims

1. Line module (1) for a high-voltage line which can be laid in the ground, having a current conductor section (2), an outer pipe (6) which is arranged concentrically around the current conductor section (2) and an insulator which is arranged between the current conductor section (2) and the outer pipe (6),
**characterized in that** the insulator comprises
- an inner insulating body (3) composed of a solid plastic and
- an outer insulating body (5) composed of a plastic foam, which inner insulating body and outer insulating body are each arranged concentrically around the current conductor section (2), so that the inner insulating body (3) and the outer insulating body (5) substantially completely fill the space between the current conductor section (2) and the outer pipe (6) .

2. Line module (1) according to Claim 1, wherein the line module (1) has an at least conical projection (15) at at least one axial line module end (9), which projection is designed to interact with a conical recess of a further line module in a dimensionally complementary manner.

3. Line module (1) according to either of the preceding claims, wherein the line module (1) comprises at least one annular connecting flange (7) for connection of the line module (1) to a further line module which is arranged concentrically in relation to the outer pipe (6) at an axial line module end (9).

4. Line module (1) according to one of the preceding claims, wherein the current conductor section (2) is a cylindrical hollow conductor (12) at least at a first axial current conductor end.

5. Line module (1) according to Claim 4, wherein the current conductor section (2) has a pin (22) at a second axial conductor end, the diameter of which pin is less than or equal to an inside diameter of the hollow conductor (12).

6. Line module (30) according to Claim 5, wherein the pin (22) has annular contact laminations (33) which are arranged radially on the outside of the pin (32).

7. Line module (1) according to one of the preceding claims, wherein the solid plastic of the inner insulating body (3) comprises an epoxy resin or a polyamide resin.

8. Line module (1) according to one of the preceding claims, wherein the plastic foam of the outer insulating body (5) comprises a polyurethane foam material.

9. Line module (1) according to one of the preceding claims, wherein the line module has an outside diameter of at least 400 mm.

10. High-voltage line (50) which can be laid in the ground, comprising a plurality of line modules (51-54) according to one of Claims 1 to 9, wherein the line modules (51-54) are connected to one another by means of a screw arrangement.

11. Method for producing a line module (11) for a high-voltage line which can be laid in the ground according to Claim 1, in which method a plastic foam composed of liquid and/or solid components is foamed in a cavity between a current conductor section (2), which is cast with a solid plastic, of the high-voltage line and an outer pipe (6) which is arranged concentrically around the current conductor section, wherein an outer insulating body (5) composed of the plastic foam is produced between the solid plastic, which forms an inner insulating body (4), and the outer pipe.

## Revendications

1. Module (1) de ligne pouvant être posé en pleine terre, comprenant une partie (2) de conducteur de courant, un tuyau (6) extérieur disposé concentriquement autour de la partie (2) de conducteur de courant et un isolateur disposé entre la partie (2) de conducteur de courant et le tuyau (6) extérieur,
**caractérisé en ce que** l'isolateur comprend
- un corps (3) intérieur isolant en une matière plastique pleine et
- un corps (5) extérieur isolant en une mousse de matière plastique,
qui sont disposés chacun concentriquement autour de la partie (2) de conducteur de courant, de manière à ce que le corps (3) intérieur isolant et le corps (5) extérieur isolant remplissent sensiblement complètement l'espace compris entre la partie (2) de conducteur de courant et le tuyau (6) extérieur.

2. Module (1) de ligne suivant la revendication 1, dans lequel le module (1) de ligne a, à au moins une extrémité (9) axiale, une saillie (15), au moins en partie, en forme de cône conçue pour coopérer à complémentarité de forme avec un évidement en forme de cône d'un autre module de ligne.

3. Module (1) suivant l'une des revendications précédentes, dans lequel le module (1) de ligne comprend au moins une bride (7) de liaison annulaire pour relier le module (1) de ligne à un autre module de ligne, bride qui est disposée concentriquement au tuyau (6) extérieur à une extrémité (9) axiale du module de ligne.

4. Module (1) suivant l'une des revendications précédentes, dans lequel la partie (2) de conducteur de courant est, au moins à une première extrémité axiale du conducteur de courant, un conducteur (12) creux de forme cylindrique.

5. Module (1) de ligne suivant la revendication 4, dans lequel la partie (2) de conducteur de courant a, à une deuxième extrémité axiale du conducteur, un tenon, dont le diamètre est inférieur ou égal à un diamètre intérieur du conducteur (12) creux.

6. Module (30) de ligne suivant la revendication 5, dans lequel le tenon (22) a des lamelles (33) de contact annulaire, qui sont disposées à l'extérieur radialement sur le tenon (32).

7. Module (1) de ligne suivant l'une des revendications précédentes, dans lequel la matière plastique pleine du corps (3) intérieur isolant comprend une résine d'époxyde ou une résine de polyamide.

8. Module (1) de ligne suivant l'une des revendications précédentes, dans lequel la mousse de matière plastique du corps (5) extérieur isolant comprend une mousse de polyuréthane.

9. Module (1) de ligne suivant l'une des revendications précédentes, dans lequel le module de ligne a un diamètre extérieur d'au moins 400 mm.

10. Ligne (50) de haute tension pouvant être posée en terre pleine, comprenant une pluralité de modules (51 à 54) de ligne suivant l'une des revendications 1 à 9, les modules (51 à 54) de ligne étant reliés entre eux au moyen d'un vissage.

11. Procédé de fabrication d'un module (11) de ligne pour une ligne à haute tension pouvant être posé en pleine terre suivant la revendication 1, dans lequel on fait mousser une mousse de matière plastique composée de constituants liquides et/ou solides dans un espace vide entre une partie (2) de conducteur de courant scellée par une matière plastique pleine de la ligne de haute tension et un tuyau (6) extérieur disposé concentriquement autour de la partie de conducteur de courant, dans lequel on produit, entre la matière plastique formant le corps (4) intérieur isolant et le tuyau extérieur, un corps (5) extérieur isolant en la mousse de matière plastique.
